# EUROPÄISCHE PATENTSCHRIFT

(11) **EP 2 151 305 B1**
(45) Veröffentlichungstag und Bekanntmachung des Hinweises auf die Patenterteilung: **23.03.2011**
(21) Anmeldenummer: 09010244.3
(22) Anmeldetag: 07.08.2009
(51) Int. Cl.: B26B 15/00, B26B 29/04, A01G 3/037

(54) **Handschere**
Hand scissors
Ciseaux manuels

(30) Priorität: 08.08.2008 DE 102008037056
(43) Veröffentlichungstag der Anmeldung: 10.02.2010
(73) Patentinhaber: MTD Products Inc., Valley City, OH 44280 (US)
(72) Erfinder: Heuel, Andreas, 57074 Siegen (DE)
(74) Vertreter: Koch, Günther

(56) Entgegenhaltungen:
- EP-A- 0 746 972
- EP-A- 1 747 712
- WO-A-89/03171
- WO-A-91/03357

## Beschreibung

Die Erfindung bezieht sich allgemein auf Handscheren mit einem relativ zu einer Gegenschneide um ein Scherengelenk verschwenkbaren Scherenmesser. Sowohl die Gegenschneide als auch das Scherenmesser der Scheren sind häufig mit scharfkantigen Schneidkanten versehen, die bei unsachgemäßer Handhabung zur Verletzung der Finger und der freien Hand führen können. Um hierdurch bedingte Verletzungen zu vermeiden, ist es bereits bekannt, Schutzvorrichtungen an derartigen Scheren vorzusehen, mit denen bewirkt werden soll, dass die das Schneidgut betätigenden Finger von den Schneidkanten fern gehalten werden.

So zeigt die US 7 124 508 B2 in den Figuren 1-8 eine Schutzvorrichtung in Gestalt einer Kappe, die auf die beiden Schneidmesser der Schere aufgeschoben wird und im geöffneten Zustand der Schere lediglich einen schmalen Schlitz frei lässt, durch den ein Papierblatt oder eine Stoffbahn eingeschoben und geschnitten werden kann, wobei die beiden Schnitthälften aus seitlichen Schlitzöffnungen im hinteren Abschnitt der Kappe heraustreten können. Der durch die Kappe gebildete Einführschlitz ist so schmal, dass kein Finger die Schneidklingen der Schere berühren kann. Geeignet ist eine derart ausgerüstete Schere jedoch nur zum Schneiden von dünnen Blattmaterialien, da die Öffnungsweite der Scherenmesser durch die Kappe begrenzt ist und das Einführen nur über den schmalen Schlitz erfolgen kann.

Figur 9 der US 7 124 508 B2 zeigt eine Schere mit einer Schutzvorrichtung, die ebenfalls nur das Einführen und Schneiden eines dünnen Blattmaterials ermöglicht, weil mit dem einen Scherenblatt eine Schutzabdeckung verbunden ist, die gegenüber der Schneidkante nur einen schmalen Spalt frei lässt, wobei das Gegenmesser frei über diese Abdeckung gleitet und nur das in den Schlitz eingeführte Material schneiden kann.

Figur 10 der US 7 124 508 B2 zeigt eine Schere, die bei Nichtgebrauch in ein Gehäuse zurückgeschoben werden kann. Wenn die Schere zur Benutzung aus dem Gehäuse vorgeschoben wird, sind die beiden Scherenmesser in jeder Spreizstellung der Schere frei zugänglich und bieten damit im Gebrauch keine Schutzfunktion.

Die US 5297342 zeigt eine Schere, bei der die Schneidkanten der beiden Scherenmesser mit im Längsabstand zueinander angeordneten Vorsprüngen versehen sind, deren Abstand so bemessen ist, dass dazwischen kein Finger eingeführt werden kann. Hierdurch wird zwar eine Verletzung durch die Schneidkanten verhindert, jedoch ist diese Schere nur für Spezialzwecke, insbesondere zum Schneiden von Fäden oder Faserbündeln geeignet, weil nur jeweils der schmale Abschnitt zwischen zwei Vorsprüngen freiliegt, wo das Schnittgut eingeführt und durchgeschnitten werden kann.

Die Erfindung geht aus von einer Handschere mit einem relativ zu einer Gegenschneide, um ein Scherengelenk verschwenkbaren Scherenmesser, bei welcher eine Schutzvorrichtung vorgesehen ist, die das Scherenmesser abdeckt und ein seitliches Einführen in das Scherenmaul verhindert.

Eine derartige Schere ist aus der WO 89/03171 bekannt. Bei dieser bekannten elektromotorisch angetriebenen Schere ist die Schutzvorrichtung als Schieber ausgebildet, der linear in das Scherengehäuse einschiebbar und durch eine Feder in eine Ruhestellung vorgespannt ist. Dieser Schieber deckt das Scherenmesser auf der einen Seite ab, von der anderen Seite her ist das Scherenmesser frei zugänglich. Eine Messerberührung von der anderen Seite her ist ungefährlich bis zu einer Stellung, in der der von einem zu schneidenden Teil in das Scherenmaul eingeschobene Teil den Schieber so weit zurückgeschoben hat, dass dieser einen Schalter betätigt, der den Elektromotor betriebsbereit schaltet. Die Schutzfunktion dieser Schere erfordert einen hohen mechanischen und elektrischen Aufwand und ist nur in Verbindung mit elektromotorisch angetriebenen Scheren wirksam und geeignet.

Der Erfindung liegt die Aufgabe zugrunde, eine konstruktiv einfache kostengünstige Schutzvorrichtung zur Verfügung zu stellen, die sowohl für handbetriebene als auch für elektromotorisch betriebene Scheren anwendbar ist und zuverlässig einen Berührungsschutz des beweglichen Messers von beiden Seiten her gewährleistet.

Gelöst wird die gestellte Aufgabe durch die im Kennzeichnungsteil des Patentanspruchs 1 angegebenen Merkmale.

Obwohl die erfindungsgemäße Schutzvorrichtung für Scheren beliebiger Bauart benutzbar ist, so erweist sie sich insbesondere zweckmäßig in ihrer Anwendung auf Gartenscheren, deren Messer elektromotorisch angetrieben werden, weil bei derartigen Scheren die Gefahr besteht, dass ihr Benutzer mit der die Schere haltenden rechten Hand den Schalter betätigt, während mit der anderen Hand im Bereich der Scherenschneiden manipuliert wird, um diese beispielsweise zu reinigen.

Wenn sich die erfindungsgemäße Schere in ihrem Ausgangszustand befindet und dann das Scherenmesser geöffnet ist, dann befindet sich die Schutzvorrichtung in einer Ruhestellung und deckt mit ihrem Messerabdeckabschnitt die Schneide des beweglichen Messers ab. Die Finger oder die Hand kann daher von keiner Seite zwischen die Schneiden der Messer eingeführt werden. Beim Schneiden eines Astes oder Zweiges wird dieser von vorne her in üblicher Weise in das Scherenmaul eingeführt, wobei der Schneidschutz elastisch zurückweicht, so dass die Schneide an dem Ast unmittelbar angreifen kann und nach Einschalten der Schere der Ast durchgeschnitten wird. Bei dem gesamten Vorgang bedeckt die Schutzvorrichtung seitlich das bewegliche Messer und dessen Spitze, wodurch Verletzungen vermieden werden.

Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Figur 1 ist eine perspektivische Darstellung einer elektromotorisch angetriebenen Handschere mit einer Schutzvorrichtung für die Scherenmesser.
Figur 2 ist eine perspektivische auseinander gezogene Einzeldarstellung, der Schneidmesser, der Schutzvorrichtung und der Gelenkanordnung.
Figur 3 und 4 sind perspektivische Ansichten der Scherenmesser und ihrer Schutzvorrichtung im zusammengebauten Zustand.
Figur 5 ist eine Seitenansicht der Scherenmesser in Öffnungsstellung;
Figur 6 ist eine Seitenansicht der Scherenmesser in Schließstellung.

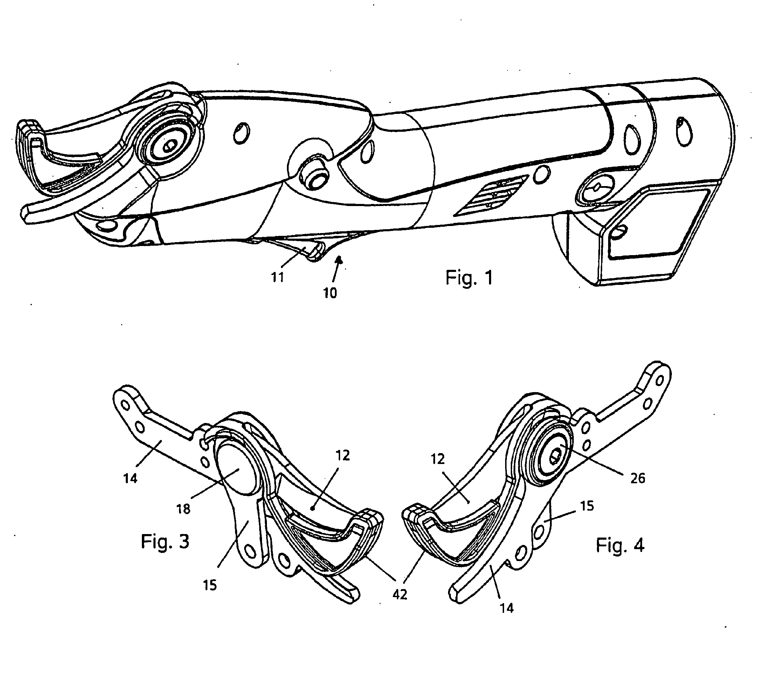

Figur 1 zeigt in perspektivischer Darstellung eine elektromotorisch angetriebene Handschere 10, in deren Gehäuse außer dem nicht dargestellten Antriebsmotor auch noch die den Motor speisenden Batterien untergebracht sein können, die über ein Ladegerät, das ebenfalls im Gehäuse untergebracht sein kann, aufladbar sind. Bei der dargestellten Schere ist ein austauschbarer 7,2V Li-Ion Akku vorgesehen, der in einer separaten Ladestation aufgeladen werden kann. Der Motor der Schere ist durch einen Handschalter 11 einschaltbar, wobei die Schaltungsanordnung, je nach Bestimmungszweck der Schere, derart ausgebildet sein kann, dass die Scherenmesser in der Schließstellung stehenbleiben, nachdem ein Schnitt durchgeführt wurde. Es ist jedoch auch möglich, die Schaltungsanordnung derart auszubilden, dass die Messer kontinuierlich geöffnet und geschlossen werden, solange der Handschalter 11 betätigt wird.

Erfindungsgemäß ist für die Messeranordnung der Schere eine weiter unten im Einzelnen beschriebene Schutzvorrichtung vorgesehen, die ein seitliches Einschieben der Finger verhindert und dadurch Verletzungen vermeidet, während das Einführen des Schneidgutes von vorn her nicht behindert wird. Die Anordnung einer solchen Schutzvorrichtung ist insbesondere für kraftbetätigte Scherenanordnungen zweckmäßig und notwendig, weil bei derartigen Scheren die Gefahr besteht, dass eine unbeabsichtigte Betätigung des Handschalters mit der einen Hand erfolgt, während mit der anderen Hand an den Messerschneiden manipuliert wird, um beispielsweise Fremdkörper aus dem Schnittbereich der Messer zu entfernen oder um diese zu reinigen. Die Erfindung ist jedoch nicht auf derartige elektrisch angetriebene Handscheren beschränkt, die in den verschiedensten Ausführungen bekannt geworden sind, sondern sie ist auch für handbetätigte Scheren anwendbar, bei denen ähnliche Verletzungsgefahren vorliegen.

Im Folgenden wird die erfindungsgemäße Schutzvorrichtung anhand einer elektromotorisch angetriebenen Handschere beschrieben, jedoch ist die Erfindung nicht auf diese hier gezeigte spezielle Formgestaltung der Messerschneiden beschränkt, sondern kann in entsprechender Ausbildung auch für andere Messerformen Anwendung finden.

Nach dem Ausführungsbeispiel weist die Schere ein bewegliches, elektromotorisch oder elektromagnetisch angetriebenes Messer 12 und eine gehäusefeste Gegenschneide 14 auf. Das bewegliche Scherenmesser 12 wird über einen an seinem Arm 15 angreifenden Antrieb verschwenkt. Zur Lagerung der Messer dient eine Gewindehülse 16, die durch die Gelenklöcher 21 bzw. 22 von Messer 12 und Gegenschneide 14 geführt ist. Die Gewindehülse 16 weist einen Stützflansch 18 auf und besitzt seitliche Abflachungen 20, die eine drehfeste Verbindung mit dem seitlich abgeflachten Loch 22 der Gegenschneide 14 gewährleisten. Das Loch 21 des Messers 12 ist rund, damit sich das Messer auf der Gewindehülse verschwenken kann. In die Gewindehülse 16 ist ein Gelenkbolzen 24 einschraubbar, der einen Stützflansch 26 und an seiner Rückseite einen Federteller 28 aufweist. Der Gelenkbolzen 24 kann über einen Inbusschlüssel angezogen werden, der in eine Schlüsselausnehmung 29 des Flansches 26 einsetzbar ist. Mit dem Federteller 28 wirkt eine Rastscheibe 30 zusammen, deren Verzahnung in die Rasten des Federtellers 28 eingreift. Die Rastscheibe 30 ist mit in der Zeichnung nicht dargestellten Fixierungsstiften ausgerüstet, die in Löcher 31 der Gegenschneide 14 einsteckbar sind und so die Rastscheibe 30 drehfest gegenüber der Gegenschneide 14 und somit gegenüber dem Gehäuse festlegen. Diese aus Rastscheibe 30 und Federteller 28 ausgebildete Schraubensicherung, über die die Vorspannung des Gelenkes einstellbar ist, kann zweckmäßig wie in der EP 1 208 306 beschrieben, ausgebildet sein. Nach dem Ausführungsbeispiel dient die Rastscheibe 30 zur Halterung einer das bewegliche Messer 12 umschließenden Schutzvorrichtung. An dieser Rastscheibe 30 ist über ein radiales Ansatzstück 32 die Schutzvorrichtung 34 angeformt, die zusammen mit der Rastscheibe 30 und dem Ansatzstück 32 einteilig aus einem elastischen Kunststoff hergestellt ist. Die Anordnung ist dabei derart getroffen, dass die Schutzvorrichtung über das Ansatzstück 32 axial versetzt über der Gegenschneide 14 und dem beweglichen Messer 12 zu liegen kommt, wenn die Teile über Gelenkbolzen 24 und Gewindehülse 16 gegeneinander verspannt sind.

Diese Anordnung erweist sich zumindest für die zeichnerisch dargestellte Form der elektromotorisch angetriebenen Handschere als zweckmäßig, jedoch ist die Erfindung nicht hierauf beschränkt. So könnte die Schutzvorrichtung auch an eine andere Scheibe oder eine andere Hülse angeformt sein, die drehfest gegenüber der Gegenschneide 14 bzw. dem Gehäuse festgelegt ist. Die Schutzvorrichtung könnte auch einseitig an der Gegenschneide angesetzt sein.

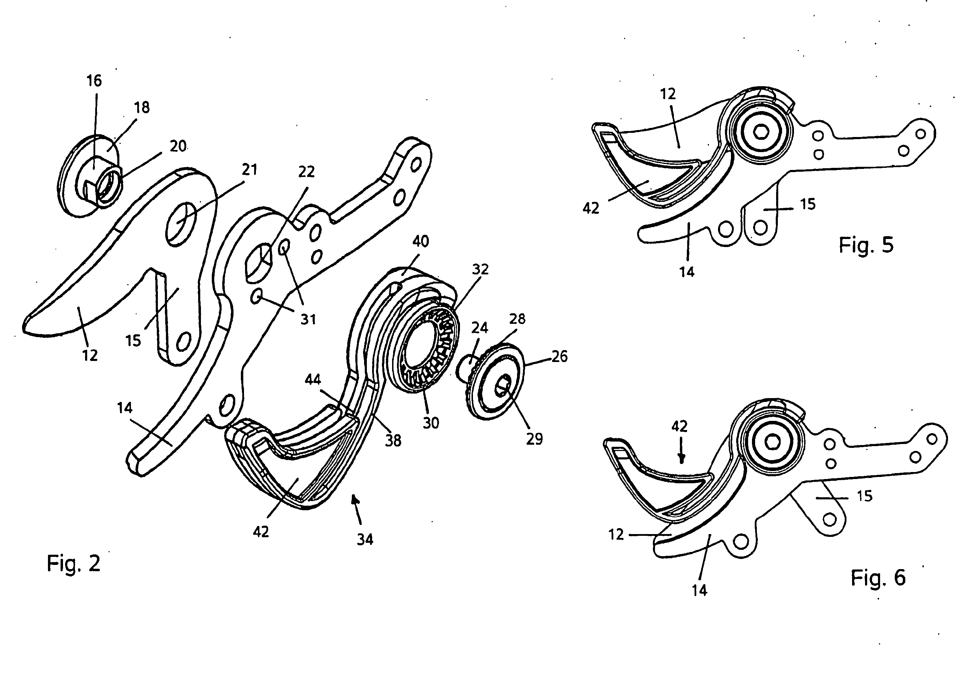

Nach dem Ausführungsbeispiel weist die Schutzvorrichtung 34 einen Auslegerarm 38 auf, der mit einem Bogenabschnitt 40 an dem Ansatzstück 32 angreift und in einen der Form der Messerschneide 12 entsprechenden Abschnitt 42 übergeht. Dieser Auslegerarm 38 weist einen Mittelschlitz 44 auf, der das Messer 12 aufnimmt, so dass dieses seitlich in jedem Betriebszustand abgedeckt ist. Der Schlitz 44 erstreckt sich, wie aus Figur 2 ersichtlich, unter Belastung von Verbindungsabschnitten an seinen beiden Enden über den gesamten Messerabdeckabschnitt 42 bis hin zu dem Bogenabschnitt 40.

Die Figur 5 zeigt eine Stellung, in der das Messer 12 von der Gegenschneide 14 abgehoben ist, d.h. das Scherenmaul ist geöffnet. Der Messerabdeckabschnitt 42 erstreckt sich dabei über das Scherenmaul, so dass seitlich, d.h. in Achsrichtung des Gelenkes, kein Gegenstand und insbesondere kein Finger der freien Hand, eingesteckt werden kann und hierdurch ein zuverlässiger Schutz gewährleistet wird. Ein zu schneidender Gegenstand, beispielsweise ein Ast, kann jedoch von vorn her in das Scherenmaul eingeführt werden, wodurch der Messerabdeckabschnitt 42 unter elastischer Deformation des Auslegerarmes 38 abgehoben wird und das Messer 12, welches im Schlitz 44 läuft, geschlossen werden kann und in die Stellung gemäß Figur 6 überführt wird, in der der abgehobene Messerabdeckabschnitt 42 durch Federwirkung des elastischen Materials wieder in die Ausgangsstellung zurückgeführt ist. Wenn das Messer 12 aus der Stellung nach Figur 6 in die Öffnungsstellung nach Figur 5 zurückgeführt wird, bleibt das sich öffnende Scherenmaul durch den federnd zurückweichenden Messerabdeckabschnitt 42 bedeckt, so dass auch während dieses Übergangs ein seitliches Einführen eines Gegenstandes, insbesondere eines Fingers, verhindert ist.

Die vorbeschriebene Schere ist mit ihrem motorischen Antrieb besonders als Gartenschere geeignet, mit der eine Beschneidung von Bäumen oder Sträuchern mit geringem Kraftaufwand durchgeführt werden kann. Die erfindungsgemäße Schutzabdeckung ist jedoch auch für andere handbetätigte Scheren geeignet, beispielsweise für Scheren, die für Kinder zum Ausschneiden oder dergleichen bestimmt sind, wobei die Schutzvorrichtung jeweils an dem festen Scherenarm festzulegen ist und gegenüber diesem elastisch ausweichbar mit einer Formgestalt ausgebildet werden muss, die in jedem Öffnungszustand der Schere eine seitliche Abdeckung gewährleistet.

Die erfindungsgemäße Schutzvorrichtung arbeitet wie folgt:
In der Ausgangsstellung (Figur 5) ist das Scherenmaul offen, d.h. das Messer 12 ist von dem Gegenmesser abgehoben. Die Schutzvorrichtung 34 ist elastisch in die Schließstellung vorgespannt und schließt das Scherenmaul ab, wobei die Schneide des Messers 12 und die Spitze des Messers 12 innerhalb des Schlitzes 44 liegen. Ein seitliches Einführen eines Gegenstandes, z.B. eines Fingers, ist nicht möglich. Wird nun von vorn ein zu schneidender Zweig oder dergleichen in das Scherenmaul eingeschoben, so wird die Schutzvorrichtung 34 um die Scherengelenkachse nach oben gegen Federwirkung verschwenkt. In dieser Stellung erfolgt die Auslösung der Schere und das Messer 12 wird auf das Gegenmesser 14 hin verschwenkt. Dabei gleitet das Messer 12 im Schlitz 44 entlang und das Scherenmaul wird geschlossen (Figur 6). Infolge der elastischen Ausbildung bzw. der federnden Vorspannung folgt die Schutzvorrichtung der Verschwenkung des Messers 12 und es kehrt beim Durchschneiden des Zweiges oder dergleichen die Schutzvorrichtung in ihre Ausgangsstellung zurück, in der sie dem Gegenmesser 14 anliegt (vergleiche Figur 6). Nach erfolgtem Schnitt kann das Scherenmesser 12 in die Ausgangsstellung (Figur 5) zurückkehren, wobei sich das Messer 12 im Schlitz 44 verschwenkt und die Schutzvorrichtung stationär in der Abdeckstellung verbleibt. Die Finger der freien Hand sind demgemäß während des gesamten Schneidvorganges gegen ein Einführen von beiden Seiten her geschützt, was Verletzungen sicher ausschließt.

Wie bei Gartenscheren üblich, ist zweckmäßigerweise ein nicht dargestellter Entriegelungsschalter mit Entriegelungstaste vorgesehen. Dabei ergibt sich die folgende Schaltfunktion:
1. Es wird zunächst eine Entriegelungstaste betätigt (Entriegelungstaste ist vollsymmetrisch gestaltet, sie ist für die Bedienung mit rechter oder linker Hand geeignet). Erst nach Betätigung der Entriegelungstaste ist der Motor der Schere durch einen Handschalter 11 einschaltbar.
2. Der Handschalter 11 wird betätigt (das Scherenmaul schließt).
3. Für das Schneiden kann die Entriegelungstaste jetzt losgelassen werden, kann aber auch gedrückt bleiben.
4. Mit losgelassener oder gedrückter Entriegelungstaste und gedrücktem Handschalter 11 schließt und öffnet das Scherenmaul kontinuierlich; im geöffneten Zustand verharrt das Messer für 0,8 sec, bevor es wieder zufährt.
5. Mit losgelassener oder gedrückter Entriegelungstaste und losgelassenem Handschalter 11 öffnet das Scherenmaul sofort, unabhängig von der Stellung des Messers 12.
6. Ist die Entriegelungstaste noch gedrückt, kann sofort wieder der Handschalter 11 zum Schneiden betätigt werden (Punkt 2); wurde die Entriegelungstaste losgelassen, muss mit Punkt 1 fortgefahren werden.

### Bezugszeichenliste

- 10: Handschere
- 11: Handschalter
- 12: Scherenmesser
- 14: Gegenschneide
- 15: Arm
- 16: Gewindehülse
- 18: Stützflansch
- 20: Abflachungen
- 21: Gelenklöcher
- 22: Gelenklöcher
- 24: Gelenkbolzen
- 26: Stützflansch
- 28: Federteller
- 29: Schlüsselausnehmung
- 30: Scheibe / Rastscheibe
- 31: Löcher
- 32: Ansatzstück
- 34: Schutzvorrichtung
- 38: Auslegerarm
- 40: Bogenabschnitt
- 42: Abschnitt / Messerabdeckabschnitt /Abdeckabschnitt
- 44: Schlitz / Mittelschlitz

## Patentansprüche

1. Handschere mit einem relativ zu einer Gegenschneide (14) um ein Scherengelenk (16, 24) verschwenkbaren Scherenmesser (12), bei welcher eine Schutzvorrichtung (34) vorgesehen ist, die das Scherenmesser (12) und dessen Schneide seitlich abdeckt und ein seitliches Einführen eines Gegenstandes in das Scherenmaul verhindert, **dadurch gekennzeichnet, dass** die aus elastischem Kunststoff bestehende Schutzvorrichtung (34) einen Abdeckabschnitt (42) mit einem das Scherenmesser (12) beidseitig führenden Schlitz (44) aufweist und mit seinem dem Messerspitzen abgewandten Endabschnitt drehfest über einen Bogenabschnitt (40) im Gelenkbereich an der Gegenschneide (14) und/oder einem hiermit verbundenen Teil (30) verankert und federnd mit dem Scherenmesser (12) auslenkbar ist.

2. Handschere nach Anspruch 1, **dadurch gekennzeichnet, dass** der mit der Gegenschneide (14) verbundene Teil als Scheibe (30) ausgebildet ist, die die Gewindehülse (16) des Drehgelenks umgreift und über eine Stiftverbindung drehfest mit der Gegenschneide (14) verbunden ist.

3. Handschere nach Anspruch 2, **dadurch gekennzeichnet, dass** die Scheibe als Rastscheibe ausgebildet ist und als Drehsicherung mit einem Federteller (28) eines Gelenkbolzens (14) zusammenwirkt, der in die Gewindehülse (16) eingeschraubt ist.

4. Handschere nach Anspruch 3, **dadurch gekennzeichnet, dass** der mit der Rastscheibe (30) zusammenwirkende Zahnkranz des Federtellers (28) von radialen Stegen gebildet ist, die elastisch als Federarme ausgebildet sind und an einem Außenring und einem Innenring des Federtellers (28) angeformt und in Umfangsrichtung in einem Abstand zueinander angeordnet sind.

5. Handschere nach einem der Ansprüche 1 bis 4, **dadurch gekennzeichnet, dass** sie als elektromotorisch angetriebene Handschere ausgebildet ist, deren Gegenschneide (14) gehäusefest ist.

6. Handschere nach Anspruch 5, **dadurch gekennzeichnet, dass** das Gehäuse einen das Scherenmesser (12) betätigenden Elektromotor und aufladbare Batterien aufweist, wobei der Motor das bewegliche Scherenmesser (12) beim Einschalten schließt oder dieses kontinuierlich bewegt.

## Claims

1. Hand shears comprising a shears blade (12) pivotable relative to a counterpart cutting edge (14) about a shears pivot (16, 24), in which there is provided a protection device (34) which laterally covers the shears blade (12) and its cutting edge and prevents lateral insertion of an object into the shears jaws, **characterised in that** the protection device (34) comprising elastic material has a cover portion (42) with a slot (44) which leads on both sides of the shears blade (12) and with its end portion remote from the blade tip is anchored non-rotatably by way of an arcuate portion (40) in the pivot region to the counterpart cutting edge (14) and/or a part (30) connected thereto and is resiliently deflectable with the shears blade (12).

2. Hand shears according to claim 1 **characterised in that** the part connected to the counterpart cutting edge (14) is in the form of a disc (30) which embraces the threaded sleeve (16) of the rotary pivot and is connected non-rotatably to the counterpart cutting edge (14) by way of a pin connection.

3. Hand shears according to claim 2 **characterised in that** the disc is in the form of a latching disc and co-operates as a rotation-preventing means with a spring plate (28) of a pivot pin (14) screwed into the threaded sleeve (16).

4. Hand shears according to claim 3 **characterised in that** the toothed ring of the spring plate (28), that co-operates with the latching disc (30), is formed by radial limbs which are elastically in the form of spring arms and are shaped on an outer ring and an inner ring of the spring plate (28) and are arranged at a spacing relative to each other in the peripheral direction.

5. Hand shears according to one of claims 1 to 4 **characterised in that** they are in the form of hand shears which are driven by an electric motor and the counterpart cutting edge (14) of which is fixed with respect to the housing.

6. Hand shears according to claim 5 **characterised in that** the housing has an electric motor actuating the shears blade (12) and rechargeable batteries, wherein the motor closes the movable shears blade (12) upon being switched on or continuously moves same.

## Revendications

1. Cisaille manuelle équipée d'une lame de coupe (12) pouvant pivoter vis-à-vis d'une contre-lame (14), autour d'une articulation (16, 24) de ladite cisaille, et dans laquelle est prévu un dispositif de protection (34) qui recouvre latéralement ladite lame de coupe (12) et le tranchant de cette dernière, et empêche l'introduction latérale d'un objet dans la région béante de ladite cisaille, **caractérisée par le fait que** le dispositif de protection (34), constitué d'une matière plastique élastique, présente une zone de recouvrement (42) munie d'une fente (44) guidant la lame de coupe (12) de part et d'autre ; est ancré par sa région extrême tournée à l'opposé des pointes des lames, avec verrouillage rotatif par l'intermédiaire d'une région arquée (40) dans la zone d'articulation, sur la contre-lame (14) et/ou sur une partie (30) reliée à celle-ci ; et peut effectuer une excursion pivotante élastique avec ladite lame de coupe (12).

2. Cisaille manuelle selon la revendication 1, **caractérisée par le fait que** la partie reliée à la contre-lame (14) est réalisée sous la forme d'un disque (30) qui ceinture la douille taraudée (16) de l'articulation tournante et est relié à ladite contre-lame (14) avec verrouillage rotatif, par l'intermédiaire d'une liaison par broches.

3. Cisaille manuelle selon la revendication 2, **caractérisée par le fait que** le disque est réalisé sous la forme d'un disque cranté et coopère, en constituant un arrêt rotatif, avec une cuvette de ressort (28) d'un tenon d'articulation (24) vissé dans la douille taraudée (16).

4. Cisaille manuelle selon la revendication 3, **caractérisée par le fait que** la couronne dentée de la cuvette de ressort (28), coopérant avec le disque cranté (30), est constituée par des membrures radiales de réalisation élastique qui matérialisent des bras élastiques, font corps avec une bague extérieure et avec une bague intérieure de ladite cuvette de ressort (28), et sont agencées avec espacement mutuel dans le sens périphérique.

5. Cisaille manuelle selon l'une des revendications 1 à 4, **caractérisée par le fait qu'**elle est réalisée sous la forme d'une cisaille manuelle à entraînement motorisé, dont la contre-lame (14) est consignée à demeure sur le carter.

6. Cisaille manuelle selon la revendication 5, **caractérisée par le fait que** le carter comprend des batteries rechargeables et un moteur électrique actionnant la lame de coupe (12), lequel moteur ferme ladite lame de coupe (12) mobile, lors de l'enclenchement, ou imprime un mouvement continu à ladite lame.
